# EUROPEAN PATENT APPLICATION

(11) **EP 2 221 757 A1**
(43) Date of publication of application: **25.08.2010**
(21) Application number: 09015494.9
(22) Date of filing: 15.12.2009
(51) Int. Cl.: G06Q 10/00, G01S 5/00

(54) **RFID location method and system thereof**

(30) Priority: 23.02.2009 TW 98105621
(71) Applicant: Champtek Incorporated, Hsin-Tien City 231 Taipei (TW)
(72) Inventor: Huang, Shu-Ying, Hsin Tien City 231 Taipei (TW); Pang, Li-Dar, Hsin Tien City 231 Taipei (TW)
(74) Representative: TER MEER - STEINMEISTER & PARTNER GbR

(57) **Abstract**

A RFID location method and a system thereof are configured for determining a coordinate position of a RFID tag (10). The RFID location method comprises: providing at least three relay routers (20A∼20C) to correspond to the RFID tag (S10); receiving an identification information and generating relay identification information having RSSI values by the relay routers corresponding to the RFID tag (S20); transmitting the relay identification information from the relay routers to a reader (30) (S30); transmitting the relay identification information from the reader to a computer (40) (S40); employing a location algorithm method to calculate the coordinate position of the RFID tag according to the RSSI values of the relay identification information by the computer (S50).

## Description

### BACKGROUND

### 1. Field of the Invention

The present invention relates to a location method and a location system thereof, and more particularly to an RFID location method and an RFID location system thereof.

### 2. Description of the Related Art

Radio Frequency Identification (RFID) is also called electronic tag or wireless radio frequency identification. RFID is a communication technology, which can employ wireless signals to identify specific objects and read/write relational data without forming mechanical or optical contacts with the specific objects. RFID can be applied into various fields, and a main decisive factor is the economic effect of this technology in those corresponding fields. The fields where this technology is applied, include: the anti-counterfeiting technology of money or product, the identification of identity card, pass, gate ticket, electronic toll collection system (such as easy-card), domestic animal or wild animal, the patient identification, the electronic medical record, and the logistics management, etc. The RFID technology can perform the production, transport, warehouse, distribution and sale of the commodity design, the material purchase, the semifinished product, and the finished product. Furthermore, the RFID technology also can real-time monitor all links of the supply chain, such as the goods returning management and the after-sale service, and accurately grasp the relational information of products, such as manufacturer, production time, place, color, size, quantity, destination and recipient, etc. In the whole electronic commerce field, the RFID technology is other trend except two trends of the internet and the mobile communication.

Real-time location system (RTLS) mainly includes a plurality of methods for calculating distances and positions according to characters of wireless signals. For example, the RTLS includes the angle of arrival (AOA) method, the time of arrival (TOA) method, the time difference of arrival (TDOA) method and the received signal strength (RSS) method. The RSS method is firstly forming an attenuation model of transmitting signals in the environment. When a measuring point detects the signals, the RSS method determines a distance between the measuring point and a corresponding signal-emitting source according to the corresponding model and the strength of the signals. The RSS method can employ an intersecting point of distance circles from three measuring points to determine the position of the signal-emitting source. The RSS method of the above four methods is suitable for the indoor environment. The other three methods are greatly influenced by a problem of having many routes in the indoor environment, and the RSS method is little influenced by the problem of having many routes. Therefore, the RSS method can predict the change of the strength of the signals in moving, thus it has a high measuring precision of the measured position.

Middleware provides a software configured for connecting a system software and an application software to communicate those software easily. The middleware may be Tomcat of the Apache company, WebSphere of the IBM company, and Apusic of the Kingdee company, etc.

Database management system is a computer software system for managing databases to control the classification of the databases, and the read of the data. An exemplary database management system may be Oracel, Microsoft SQL Server, Access, MySQL and PostgreSQL, etc. Managers can employ the database management system to establish a database system.

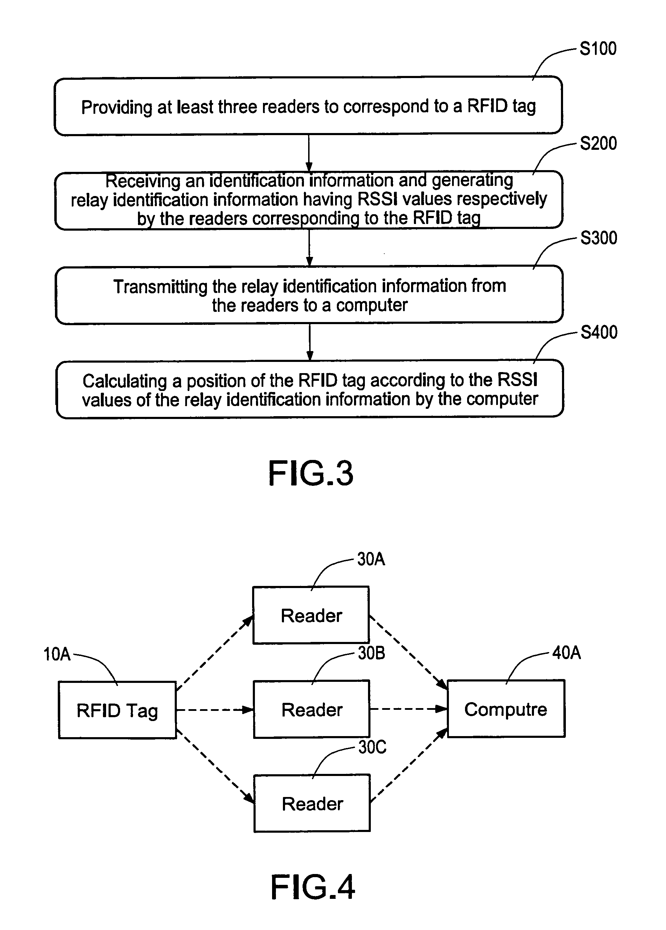

Refer to FIG. 3, which is a flow chart of a conventional RFID location method. The conventional RFID location method can determine a coordinate position of a RFID tag. The RFID tag can emit an identification information. The conventional RFID location method includes steps S100~S400. Firstly, the step S100 is providing at least three readers to correspond to the RFID tag. Then, the step S200 is receiving the identification information and generating relay identification information having RSSI values respectively by the readers corresponding to the RFID tag. Afterwards, the step S300 is transmitting the relay identification information from the readers to a computer. Finally, the step S400 is calculating a coordinate position of the RFID tag according o the RSSI values of the relay identification information by the computer.

Refer to FIG. 4, which is a block view of a conventional RFID location system. The conventional RFID location system includes at least three readers 30A∼30C and a computer 40A to determine a coordinate position of a RFID tag 10A. The RFID tag 10A can emit an identification information (not shown). The readers 30A∼30C are disposed to correspond to the RFID tag 1-A, for receiving the identification information to generate relay identification information having RSSI values (not shown) respectively. The computer 40A is electrically coupled to the readers 30A∼30C. The readers 30A~30C transmit the relay identification information to the computer 40A, and the computer 40A can calculates the coordinate position of the RFID tag 10A according to the RSSI values of the relay identification information.

However, the conventional RFID location method and the location system thereof have disadvantages, which is the readers must employ networks to transmit the information to a back-end system (the computer) and network lines must be provided at building positions of the readers. Thus it will greatly increase a building cost and a complexity thereof, and prolong a building time thereof.

### BRIEF SUMMARY

The present invention relates to a RFID location method configured for accurately locating a coordinate position of a RFID tag, which can solve the problem of the conventional technology.

The present invention also relates to a RFID location system configured for accurately locating a coordinate position of a RFID tag, which can solve the problem of the conventional technology.

A RFID location method in accordance with an exemplary embodiment of the present invention is configured for determining a coordinate position of a RFID tag, and the RFID tag can emit an identification information. The RFID location method comprises: providing at least three relay routers to correspond to the RFID tag; receiving the identification information and generating relay identification information having RSSI values by the relay routers corresponding to the RFID tag; transmitting the relay identification information from the relay routers to a reader; transmitting the relay identification information from the reader to a computer; employing a location algorithm method to calculate the coordinate position of the RFID tag according to the RSSI values of the relay identification information by the computer.

A RFID identification system in accordance with another exemplary embodiment of the present invention is configured for determining a coordinate position of a RFID tag, and the RFID tag can emit an identification information. The RFID location system comprises: at least three relay routers located to correspond to the RFID tag and configured for receiving the identification information to generate relay identification information having RSSI values respectively; a reader operatedly coupled to the relay routers for the relay routers transmitting the relay identification information to the reader; and a computer electrically coupled to the reader for the reader transmitting the relay identification information to the computer. The computer employs a location algorithm method to calculate the coordinate position of the RFID tag according to the RSSI values of the relay identification information.

### BRIEF DESCRIPTION OF THE DRAWINGS

These and other features and advantages of the various embodiments disclosed herein will be better understood with respect to the following description and drawings, in which like numbers refer to like parts throughout, and in which:

FIG. 1 is a flow chart of a RFID location method in accordance with an exemplary embodiment of the present invention.

FIG. 2 is a block view of a RFID location system in accordance with another exemplary embodiment of the present invention.

FIG. 3 is a flow chart of a conventional RFID location method.

FIG. 4 is a block view of a conventional RFID location system.

### DETAILED DESCRIPTION

Reference will now be made to the drawings to describe exemplary embodiments of the present RFID location method and the system thereof, in detail. The following description is given by way of example, and not limitation.

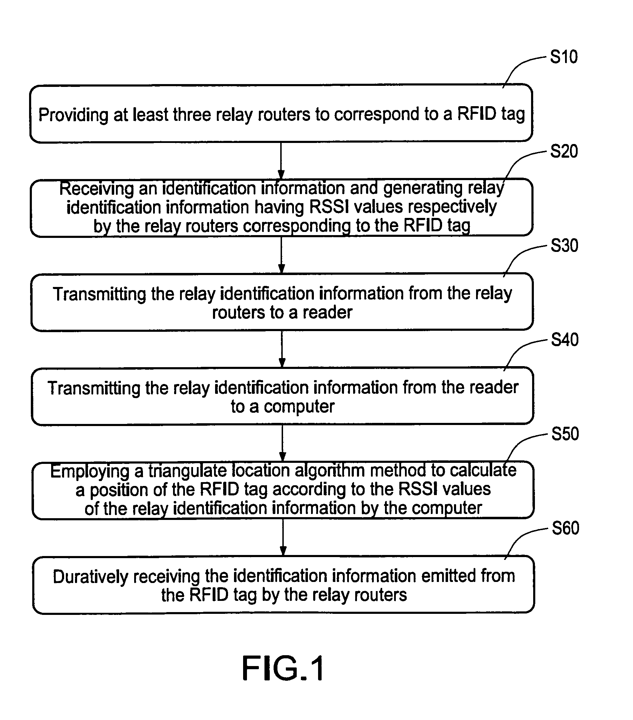

Refer to FIG. 1, which is a flow chart of a RFID location method in accordance with an exemplary embodiment of the present invention. The RFID location method of the present invention can determine a coordinate position of a RFID tag, and the RFID tag can emit an identification information. The RFID location method includes steps S10~S60 described in following. Firstly, the step S 10 is providing at least three relay routers corresponding to the RFID tag. Then, the step S20 is receiving the identification information and generating relay identification information having RSSI values respectively by the relay routers corresponding to the RFID tag. Afterwards, the step S30 is transmitting the relay identification information from the relay routers to a reader. Followingly, the step S40 is transmitting the relay identification information from the reader to a computer. Then, the step S50 is employing a location algorithm method (such as a triangulate location algorithm method) calculates the coordinate position of the RFID tag by according to the RSSI values of the relay identification information by the computer. Finally, the step S60 is duratively receiving the identification information emitted from the RFID tag by the relay routers. The relay routers may be a mesh architecture, and the computer includes a middleware, a real-time location system and a database management system (such as MySQL).

The RFID location method of the present invention employs an combination application of the received signal strength (RSS) method generally applied into the real-time location system and the location algorithm method generally applied into the GPS. The relay routers developed from the mesh architecture, are located between the conventional RFID tag and the reader. The RFID location method employs the relay routers to receive the RSSI values, and then calculates the coordinate position of the RFID tag by the location algorithm method. Therefore, the RFID location method of the present invention can greatly reduce the building cost thereof, and can real-time and accurately estimate the actual coordinate position of the RFID tag. Thus the present invention has a better effect and a better precision than the conventional technology which only employs the readers to locate.

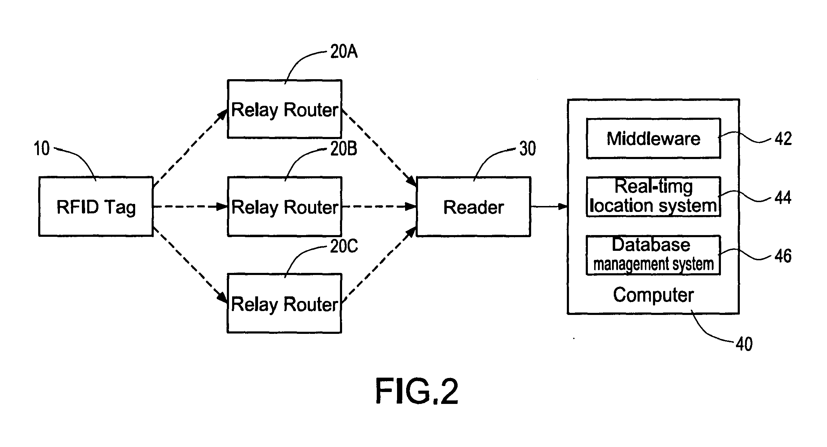

Refer to FIG. 2, which is a block view of a RFID location system in accordance with another exemplary embodiment of the present invention. The RFID location system includes at least three relay routers 20A∼20C, a reader 30 and a computer 40. The RFID location system can determine a coordinate position of a RFID tag 10, and the RFID tag 10 can emit an identification information (not shown). The relay routers 20A∼20C are located to correspond to the RFID tag 10 for receiving the identification information to generate relay identification information (not shown) having RSSI values respectively. The reader 30 is operatedly coupled (such as, wirelessly coupled) to the relay routers 20A∼20C. The relay routers 20A∼20C transmit the relay identification information to the reader 30, and the computer 40 is electrically coupled to the reader 30. The reader 30 transmits the relay identification information to the computer 40. The computer can calculate the coordinate value of the RFID tag 10 by a location algorithm method (such as a triangulate location algorithm method) according to the RSSI values of the relay identification information. The relay routers 20A∼20C may be a mesh architecture, and the computer 40 includes a middleware 42, a real-time location system 44 and a database management system 46 (such as, MySQL). The RFID location system of the present invention can employ an combination application of the received signal strength (RSS) method generally applied into the real-time location system and the location algorithm method generally applied into the GPS. The relay routers 20A∼20C developed from the mesh architecture are located between the conventional RFID tag and the reader. The RFID location system employs the relay routers 20A∼20C to receive the RSSI values, and then calculates the coordinate position of the RFID tag 10 by the location algorithm. Therefore, the RFID location system of the present invention can greatly reduce the building cost thereof, and can real-time and accurately estimate the actual coordinate position of the RFID tag. Thus the present invention has a better effect and a better precision than the conventional technology which only employs the readers to locate.

The above description is given by way of example, and not limitation. Given the above disclosure, one skilled in the art could devise variations that are within the scope and spirit of the invention disclosed herein, including configurations ways of the recessed portions and materials and/or designs of the attaching structures. Further, the various features of the embodiments disclosed herein can be used alone, or in varying combinations with each other and are not intended to be limited to the specific combination described herein. Thus, the scope of the claims is not to be limited by the illustrated embodiments.

## Claims

1. A RFID location method configured for determining a coordinate position of a RFID tag (10), the RFID tag being configured for emitting an identification information, the method comprising:
providing at least three relay routers (20A~20C) to correspond to the RFID tag (S10);
receiving the identification information and generating relay identification information having RSSI values by the relay routers corresponding to the RFID tag (S20);
transmitting the relay identification information from the relay routers to a reader (30) (S30);
transmitting the relay identification information from the reader to a computer (40) (S40);
employing a location algorithm method to calculate the coordinate position of the RFID tag according to the RSSI values of the relay identification information by the computer (S50).

2. The method as claimed in claim 1, further comprising duratively receiving the identification information emitted from the RFID tag by the relay routers (S60).

3. The method as claimed in clam 1, wherein the relay routers is a mesh architecture.

4. The method as claimed in claim 1, wherein the computer comprises a middleware (42), a real-time location system (44) and a database management system (46).

5. The method as claimed in claim 1, wherein the location algorithm method is a triangulate location algorithm method.

6. A RFID location system configured for determining a coordinate position of a RFID tag (10), the RFID tag being configured for emitting an identification information, the system comprising:
at least three relay routers (20A∼20C) located to correspond to the RFID tag and configured for receiving the identification information to generate relay identification information having RSSI values respectively;
a reader (30) operatedly coupled to the relay routers for the relay routers transmitting the relay identification information to the reader; and
a computer (40) electrically coupled to the reader for the reader transmitting the relay identification information to the computer;
wherein the computer employs a location algorithm method to calculate the coordinate position of the RFID tag according to the RSSI values of the relay identification information.

7. The system as claimed in claim 6, wherein the reader is wirelessly coupled to the relay routers.

8. The system as claimed in claim 6, wherein the relay routers are a mesh architecture.

9. The system as claimed in claim 6, wherein the computer comprises a middleware (42), a real-time location system (44) and a database management system (46).

10. The system as claimed in claim 6, wherein the location algorithm method is a triangulate location algorithm method.
